# EUROPEAN PATENT APPLICATION

(11) **EP 4 809 808 A1**
(43) Date of publication of application: **23.09.2026**
(21) Application number: 26154246.8
(22) Date of filing: 27.01.2026
(51) Int. Cl.: A01D 34/64, A01D 69/06

(54) **ELECTRIC MOWING DEVICE**

(30) Priority: 20.03.2025 CN 202510339655; 11.12.2025 CN 202511870090; 11.12.2025 CN 202522630839 U; 11.12.2025 CN 202511866805
(71) Applicant: Nanjing Chervon Industry Co., Ltd., Nanjing, Jiangsu 211106 (CN)
(72) Inventor: LI, Chunrui, Nanjing, Jiangsu 211106 (CN); GAO, Yunfei, Nanjing, Jiangsu 211106 (CN)
(74) Representative: Sun, Yiming

(57) **Abstract**

An electric working device includes a transmission assembly. The transmission assembly includes at least a gear set that externally meshes and a transmission housing for accommodating the gear set. The transmission housing further includes a guide member (46) and a pressure relief valve (47). The pressure relief valve (47) is configured to adjust air pressure in the transmission housing. The guide member (46) extends inward from a sidewall of the transmission housing along a circumferential direction of a gear with a maximum diameter and is disposed between the largest gear (4331) and the pressure relief valve (47).

## Description

### TECHNICAL FIELD

The present application relates to a power tool and, in particular, to an electric working device and an electric mowing device.

### BACKGROUND

In the related art, a transmission solution of an electric mowing device includes a technical solution, such as a gear transmission mechanism that externally meshes, a planet gear transmission mechanism, or a wheel motor combined with planet gear transmission. As an increasingly high requirement is imposed on product compactness in the related technical field, along with the optimization of product costs, it is necessary for a transmission solution to better balance structural compactness and cost efficiency on the premise of ensuring product service life and reliability.

This part provides background information related to the present application, and the background information is not necessarily the existing art.

### SUMMARY

An object of the present application is to solve or at least alleviate part or all of the preceding problems. Therefore, the present application provides an electric working device and an electric mowing device.

To achieve the preceding object, the present application adopts the technical solutions below.

An electric mowing device includes: a vehicle frame; a traveling wheel set including a first driving wheel and a second driving wheel; a mowing mechanism at least partially disposed between the first driving wheel and the second driving wheel, where the mowing mechanism includes a blade and a cutting deck covering the blade; and a driving mechanism including a first motor having an output shaft and a transmission assembly connected between the first motor and the first driving wheel, where the transmission assembly includes at least a gear set that externally meshes and a transmission housing for accommodating the gear set. The transmission housing further includes a guide member and a pressure relief valve, where the pressure relief valve is configured to adjust air pressure in the transmission housing, and the guide member extends inward from a sidewall of the transmission housing along a circumferential direction of a gear with a maximum diameter and is disposed between the largest gear and the pressure relief valve.

In some examples, the pressure relief valve is disposed on a wall of the transmission housing at a periphery of the gear with the maximum diameter in the gear set.

In some examples, lubricating oil that lubricates at least the gear set is configured in the transmission housing, and the guide member guides a flow direction of the lubricating oil.

In some examples, the transmission assembly further includes bearings, the bearings support rotations of shafts in the gear set, and support portions for mounting the bearings are formed on the transmission housing.

In some examples, oil slots are provided on the support portions to cause the lubricating oil in the transmission housing to lubricate the bearings through the oil slots.

In some examples, at least one of the oil slots is provided on each of the support portions.

In some examples, at least part of the bearings include open bearings.

In some examples, the gear set includes a third gear set for transmitting power to the traveling wheel set, the third gear set includes a third gear, and the third gear is the largest gear.

In some examples, the gear set further includes a first gear set that is driven by the output shaft of the first motor and rotates about a first axis and a second gear set that rotates about a second axis, and the second gear set is configured to transmit power of the first gear set to the third gear set that rotates about a third axis.

In some examples, the second axis is located below the first axis in an up and down direction when the driving mechanism is mounted on the vehicle frame.

In some examples, an included angle α between a line N that connects a projection of the first axis and a projection of the second axis on a first plane and a line M that connects a projection of the third axis and the projection of the second axis on the first plane is greater than or equal to 90° and less than 180°, and the first plane is substantially perpendicular to the first axis.

In some examples, a distance L between a projection of the first axis and a projection of the third axis on a first plane is greater than 60 mm and less than 180 mm, and the first plane is substantially perpendicular to the first axis.

In some examples, an oil filling hole is further provided on the transmission housing, the oil filling hole is configured for filling lubricating oil into the transmission housing when the lubricating oil is insufficient, a center line of the oil filling hole is parallel to the second axis, and the center line of the oil filling hole is located below the second axis.

An electric working device includes: a vehicle frame; a traveling wheel set including a first driving wheel and a second driving wheel; a working mechanism at least partially disposed between the first driving wheel and the second driving wheel; and a driving mechanism including a first motor having an output shaft and a transmission assembly connected between the first motor and the first driving wheel, where the transmission assembly includes at least a gear set that externally meshes and a transmission housing for accommodating the gear set. The gear set includes a first gear set that is driven by the output shaft and rotates about a first axis, a second gear set that rotates about a second axis, and a third gear set for transmitting power to the traveling wheel set, the second gear set is staggered from the first gear set and the third gear set, the second gear set, the first gear set, and the third gear set are arranged in a triangular shape, the gear set further includes bearings, support portions for mounting the bearings are formed on the transmission housing, oil slots are provided on the support portions, and lubricating oil is disposed in the oil slots.

An electric mowing device includes: a vehicle frame; a traveling wheel set including a first driving wheel and a second driving wheel; a mowing mechanism at least partially disposed between the first driving wheel and the second driving wheel, where the mowing mechanism includes a blade and a cutting deck covering the blade; and a driving mechanism including a first motor having an output shaft and a transmission assembly connected between the first motor and the first driving wheel, where the transmission assembly includes a gear set and a transmission housing for accommodating the gear set. The gear set includes bearings, support portions for mounting the bearings are formed on the transmission housing, and oil slots are provided on the support portions to enable lubricating oil in the transmission housing to lubricate the bearings.

In some examples, at least part of the bearings are configured to be open bearings.

In some examples, the number of the oil slots is configured to be plural.

In some examples, the gear set includes a first gear set that is driven by the output shaft and rotates about a first axis, a second gear set that rotates about a second axis, and a third gear set for transmitting power to the traveling wheel set, where the second gear set is used for transmitting power of the first gear set to the third gear set that rotates about a third axis.

In some examples, the second axis is located below the first axis in an up and down direction when the driving mechanism is mounted on the vehicle frame.

In some examples, an oil filling hole is further provided on the transmission housing, the oil filling hole is configured for filling lubricating oil into the transmission housing when the lubricating oil is insufficient, a center line of the oil filling hole is parallel to the second axis, and the center line of the oil filling hole is located below the second axis.

An electric working device includes: a traveling wheel set including a first driving wheel and a second driving wheel; a working mechanism at least partially disposed between the first driving wheel and the second driving wheel; and a driving mechanism including a first motor having an output shaft and a transmission assembly connected between the first motor and the first driving wheel. The transmission assembly includes at least a first gear set that is driven by the output shaft and rotates about a first axis, a second gear set that rotates about a second axis, and a third gear set for transmitting power to the traveling wheel set. The second gear set is used for transmitting power of the first gear set to the third gear set that rotates about a third axis. An included angle α between a line N that connects a projection of the first axis and a projection of the second axis on a first plane and a line M that connects a projection of the third axis and the projection of the second axis on the first plane is greater than or equal to 90° and less than 180°. A distance L between the projection of the first axis and the projection of the third axis on the first plane is greater than 60 mm and less than 180 mm, and the first plane is substantially perpendicular to the first axis.

In some examples, a transmission housing for accommodating at least part of the transmission assembly is further included, and the transmission housing includes a first housing and a second housing that are arranged along an axis direction of the output shaft.

In some examples, a distance L1 from a mounting surface where the first housing and the second housing are joined to each other to the first driving wheel is greater than or equal to 10 mm and less than or equal to 110 mm.

In some examples, a vehicle frame is further included, and the traveling wheel set, the working mechanism, and the driving mechanism are mounted to the vehicle frame.

In some examples, the second axis is located below the first axis in an up and down direction when the driving mechanism is mounted on the vehicle frame.

In some examples, the first gear set includes a first gear, and the second gear set includes a first transition gear that externally meshes with the first gear.

In some examples, the second gear set further includes a second transition gear coaxial with the first transition gear, the third gear set includes a third gear, and the second transition gear externally meshes with the third gear.

In some examples, a second motor for driving the second driving wheel and a second transmission assembly disposed between the second motor and the second driving wheel are further included.

In some examples, a distance W1 between the first motor and the second motor is greater than 10 mm and less than or equal to 30 mm.

In some examples, the working mechanism includes a mowing mechanism and a snow throwing mechanism.

An electric mowing device includes: a vehicle frame; a traveling wheel set including a first driving wheel and a second driving wheel; a mowing mechanism at least partially disposed between the first driving wheel and the second driving wheel, where the mowing mechanism includes a blade and a cutting deck covering the blade; and a driving mechanism including a first motor having an output shaft and a transmission assembly connected between the first motor and the first driving wheel. The transmission assembly includes a first gear set that is driven by the output shaft and rotates about a first axis, a second gear set that rotates about a second axis, and a third gear set for transmitting power to the traveling wheel set. The second gear set is used for transmitting power of the first gear set to the third gear set that rotates about a third axis. The second axis is located below the first axis in an up and down direction when the driving mechanism is mounted on the vehicle frame, and a maximum cutting width W of the mowing mechanism is less than or equal to 40 inches.

In some examples, an included angle α between a line N that connects a projection of the first axis and a projection of the second axis on a first plane and a line M that connects a projection of the third axis and the projection of the second axis on the first plane is greater than or equal to 90° and less than 180°, a distance L between the projection of the first axis and the projection of the third axis on the first plane is greater than 60 mm and less than 180 mm, and the first plane is substantially perpendicular to the first axis.

In some examples, a transmission housing for accommodating at least part of the transmission assembly is further included, and the transmission housing includes a first housing and a second housing that are arranged along an axis direction of the output shaft.

In some examples, a distance L1 from a mounting surface where the first housing and the second housing are joined to each other to the first driving wheel is greater than or equal to 10 mm and less than or equal to 110 mm.

In some examples, the first gear set includes a first gear, and the second gear set includes a first transition gear that externally meshes with the first gear.

In some examples, the second gear set further includes a second transition gear coaxial with the first transition gear, the third gear set includes a third gear, and the second transition gear externally meshes with the third gear.

In some examples, a second motor for driving the second driving wheel and a second transmission assembly disposed between the second motor and the second driving wheel are further included.

In some examples, a distance W1 between the first motor and the second motor is greater than 10 mm and less than or equal to 30 mm.

In some examples, a support portion is further included, and the support portion is used for supporting a user and includes at least one of a standing platform or a seat.

An electric mowing device includes: a vehicle frame; a traveling wheel set including a first driving wheel and a second driving wheel; a mowing mechanism at least partially disposed between the first driving wheel and the second driving wheel, where the mowing mechanism includes a blade and a cutting deck covering the blade; and a driving mechanism including a first motor having an output shaft and a transmission assembly connected between the first motor and the first driving wheel. The transmission assembly includes a gear set for transmitting power of the first motor to the first driving wheel and a transmission housing for mounting the gear set. The transmission housing includes a first housing and a second housing that are distributed along an axis direction of the output shaft. A distance L1 from a mounting surface where the first housing and the second housing are joined to each other to the first driving wheel is greater than or equal to 10 mm and less than or equal to 110 mm, and in a front and rear direction, a minimum distance L2 between a motor housing and the cutting deck is greater than or equal to 20 mm and less than or equal to 70 mm.

In some examples, the distance L1 from the mounting surface where the first housing and the second housing are joined to each other to the first driving wheel is greater than or equal to 10 mm and less than or equal to 60 mm.

In some examples, the mounting surface where the first housing and the second housing are joined to each other is perpendicular to an axis of the output shaft.

In some examples, the first housing and the second housing are sealingly connected to each other.

In some examples, a second motor for driving the second driving wheel and a second transmission assembly disposed between the second motor and the second driving wheel are further included.

In some examples, a distance W1 between the first motor and the second motor is greater than 10 mm and less than or equal to 30 mm.

In some examples, the gear set includes a first gear set that is driven by the output shaft and rotates about a first axis, a second gear set that rotates about a second axis, and a third gear set for transmitting power to the traveling wheel set, where the second gear set is used for transmitting power of the first gear set to the third gear set that rotates about a third axis.

In some examples, the first gear set, the second gear set, and the third gear set externally mesh for transmission.

In some examples, the second gear set is staggered from the first gear set and the third gear set, and the second gear set, the first gear set, and the third gear set are arranged in a triangular shape.

In some examples, a maximum cutting width W of the mowing mechanism is less than or equal to 40 inches.

An electric mowing device includes: a traveling wheel set including a first driving wheel and a second driving wheel; a mowing mechanism at least partially disposed between the first driving wheel and the second driving wheel, where the mowing mechanism includes a blade and a cutting deck covering the blade; and a driving mechanism including a first motor having an output shaft and a transmission assembly connected between the first motor and the first driving wheel. The transmission assembly includes a gear set for transmitting power of the first motor to the first driving wheel and a transmission housing for mounting the gear set. The transmission housing includes a first housing and a second housing that are distributed along a left and right direction. A distance L1 from a mounting surface of the first housing and the second housing to the first driving wheel is greater than or equal to 10 mm and less than or equal to 60mm, and a maximum cutting width W of the mowing mechanism is less than or equal to 40 inches.

### BRIEF DESCRIPTION OF DRAWINGS

FIG. 1 is a perspective view of an electric working device according to an example of the present application.
FIG. 2 is a schematic view showing that a power supply is adapted to different power tools as an example of the present application.
FIG. 3 is a bottom view of an electric working device as an example of the present application, including a vehicle frame, a mowing mechanism, and traveling mechanisms.
FIG. 4 is a perspective view of a single-side driving mechanism as an example of the present application.
FIG. 5 is a perspective view of internal components of a single-side driving mechanism as an example of the present application from another angle of view.
FIG. 6 is a schematic view of FIG. 5 from another angle of view.
FIG. 7 is a schematic view showing part of a half-sectional view of FIG. 4.
FIG. 8 is a schematic view showing some structures in a transmission assembly as an example of the present application.
FIG. 9 is a schematic view showing some structures in a transmission assembly as an example of the present application from another angle of view.
FIG. 10 is a schematic view of a transmission housing as an example of the present application.
FIG. 11 is a schematic view of a transmission housing as an example of the present application from another angle of view.
FIG. 12 is a schematic view of a first motor as an example of the present application.
FIG. 13 is a half-sectional view of FIG. 12.
FIG. 14 is a schematic view of a single-side traveling mechanism as another example of the present application.
FIG. 15 is a sectional view of FIG. 14.
FIG. 16 is a schematic view of a first motor as an example of the present application from another angle of view.
FIG. 17 is a schematic view showing part of a half-sectional view of FIG. 16.
FIG. 18 is a schematic view showing another part of a half-sectional view of FIG. 16.
FIG. 19 is a schematic view of some components of a wiring assembly in FIG. 18.
FIG. 20 is a schematic view showing part of an internal structure of a first motor.
FIG. 21 is a schematic view showing part of an internal structure of a first motor from another angle of view.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

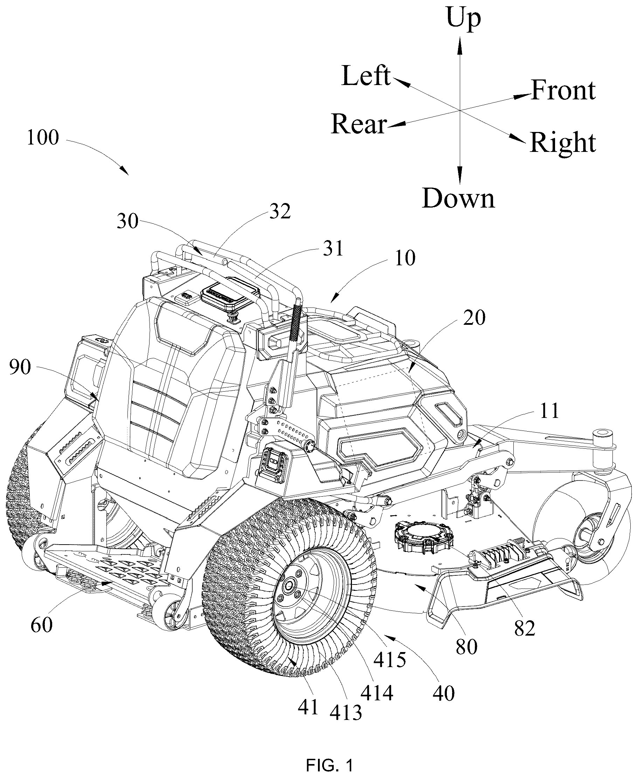

As shown in FIG. 1, a user may sit or stand on an electric working device 100 disclosed in the present application to operate the electric working device 100. For example, the electric working device 100 may be an electric mowing device for trimming lawns and other vegetation. The electric working device 100 may be a utility vehicle (UTV). In the related art, the utility vehicle includes a four-wheel all-terrain vehicle (ATV), a multi-purpose all-terrain vehicle, and a go-kart. The electric working device 100 may be a manned snow thrower or an electric motorcycle. The directions of front, rear, left, right, up, and down are described as directions shown in FIG. 1. Specifically, when the user sits or stands on the stand-on mower 100 on the ground, it is defined that a direction which the user faces is front, a direction which the user faces away from is rear, a direction on a left-hand side of the user is left, a direction on a right-hand side of the user is right, a direction facing the ground is down, and a direction away from the ground is up.

In some examples, the electric working device 100 may be a hand-push working device. When operating the hand-push working device, the user stands behind the hand-push working device and pushes the hand-push working device to travel on the ground.

As shown in FIGS. 1 to 3, in this example, the electric mowing device such as the stand-on mower is used as an example of the electric working device 100. The user stands on the stand-on mower to operate the stand-on mower. In the following disclosure, the stand-on mower is used for referring to the electric mowing device, and likewise, the stand-on mower is used for referring to the electric working device 100. Such references are used for conveniently describing the disclosure and do not limit the electric working device 100 to the stand-on mower or the electric mowing device, and the electric working device 100 may be the other products described above.

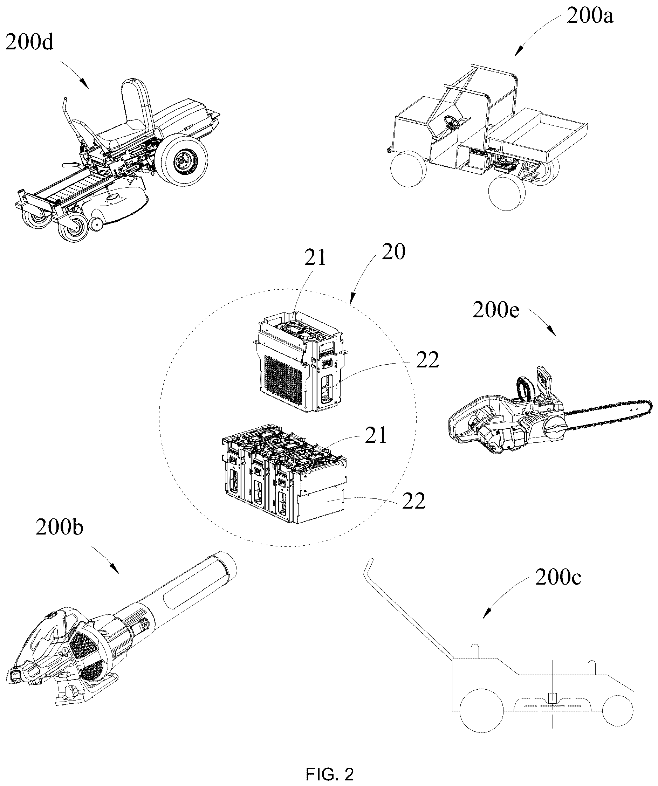

The stand-on mower 100 includes a vehicle body 10 and a power supply 20. The power supply 20 is disposed on the vehicle body 10. The power supply 20 includes multiple battery packs 21 and is configured to power at least a traveling motor or a mowing motor. The electric stand-on mower 100 is more environmentally friendly and more energy-efficient than a fuel-based stand-on mower 100. At least one of the multiple battery packs 21 is detachably mounted to a coupling portion of the stand-on mower 100. In some examples, the preceding coupling portion includes a battery compartment 22. Optionally, the multiple battery packs 21 are configured to be detachable from the stand-on mower 100 to power another power tool or a utility vehicle 200a. For example, FIG. 2 shows a power supply platform of the battery packs 21. It is to be understood that the battery packs 21 can power a power tool on the power supply platform. Optionally, the power tool may be a garden tool, such as a grass trimmer, a blower 200b, and a riding mower 200d. The power tool 200 may be a handheld power tool, such as a chainsaw 200e and a hedge trimmer. The power tool may be a hand-push power tool, such as a push snow thrower and a push mower 200c. The power tool may be a drilling tool, a sawing tool, or an electric garden tool.

The vehicle body 10 includes a vehicle frame 11, a traveling mechanism 40, an operating mechanism 30, a support mechanism 90, and a working mechanism 80. The vehicle frame 11 extends substantially along a front and rear direction and is used for mounting the traveling mechanism 40, the operating mechanism 30, the support mechanism 90, and the working mechanism 80.

The traveling mechanism 40 includes a traveling wheel set 41 and a driving mechanism 42. The traveling wheel set 41 supports the vehicle body 10, and the driving mechanism 42 is configured to drive the stand-on mower 100 to travel. The traveling wheel set 41 includes rear traveling wheels 411 and front traveling wheels 412. Optionally, the rear traveling wheels 411 include a left rear traveling wheel 411L and a right rear traveling wheel 411R. The front traveling wheels 412 include a left front traveling wheel 412L and a right front traveling wheel 412R. The driving mechanism 42 includes a traveling motor that drives the traveling wheels to rotate. The traveling motor drives the rear traveling wheels 411 or the front traveling wheels 412 to rotate and is configured to implement a traveling function of the stand-on mower 100. Optionally, one, two, three, or four traveling motors may be provided. For example, the traveling mechanism 40 includes a first driving wheel and a second driving wheel 411R that receive power from the traveling motor and drive the stand-on mower 100 to travel. In this example, the first driving wheel is the left rear traveling wheel 411L, and the second driving wheel 411R is the right rear traveling wheel 411R. The traveling motor includes a first motor 421 for providing a driving force for the left rear traveling wheel 411L and a second motor 422 for providing a driving force for the right rear traveling wheel 411R. For convenience of reference, in the subsequent description, the first driving wheel 411L is used for referring to the left rear traveling wheel, and the second driving wheel 411R is used for referring to the right rear traveling wheel. The traveling mechanism 40 separately provides driving forces for the first driving wheel 411L and the second driving wheel 411R in an independently driving manner. Optionally, the front traveling wheels 412 are configured to be caster wheels so that the stand-on mower 100 can turn in another direction deviating from the front and rear direction.

The operating mechanism 30 is operated by the user and indicates desired operations of the user to control the manned mower 100 to move forward, move backward, and turn. In this example, the operating mechanism 30 includes a first operating lever 31 and a second operating lever 32. Steering of the stand-on mower 100 and a speed at which the stand-on mower 100 travels straight are controlled according to tilt angles of the first operating lever 31 and the second operating lever 32. In other alternative examples, the operating mechanism 30 includes a steering wheel, such as a circular standard steering wheel, a flat-bottom or flat-top steering wheel, a rectangular steering wheel, a multi-functional steering wheel, a foldable steering wheel, and a touch steering wheel.

The support mechanism 90 is used for supporting an operator, and the support mechanism 90 is mounted on the vehicle body 10. The support mechanism 90 includes a standing platform 60, and the standing platform 60 has a standing surface configured to support the operator. The standing platform 60 is disposed at a rear of the vehicle frame 11, connected to the vehicle frame 11, and located between the two rear traveling wheels 411 (the first driving wheel 411L and the second driving wheel 411R). When the user stands on the standing platform 60 of the support mechanism 90 and operates the stand-on mower 100 to work, the stand-on mower 100 is in a manned state. Optionally, the support mechanism 90 includes a seat. The seat is mounted to the vehicle frame 11 and used for the user to sit on.

The working mechanism 80 is at least partially disposed between the first driving wheel 411L and the second driving wheel 411R. It is to be explained that between the first driving wheel 411L and the second driving wheel 411R, the working mechanism 80 may be disposed side by side with the first driving wheel 411L and the second driving wheel 411R in one direction, or the working mechanism 80 may be staggered from the first driving wheel 411L and the second driving wheel 411R separately, for example, the working mechanism 80 is disposed on a front side of the first driving wheel 411L, but the working mechanism 80 is still located in an area between the first driving wheel 411L and the second driving wheel 411R.

In this example, the working mechanism 80 is a mowing mechanism. The mowing mechanism is mounted at a bottom of the vehicle frame 11, and at least part of the mowing mechanism is mounted between the first driving wheel 411L and the second driving wheel 411R. Exemplarily, the mowing mechanism is mounted between the rear traveling wheel 411 and the front traveling wheel 412. In some examples, the working mechanism 80 is a snow throwing mechanism. The snow throwing mechanism is mounted on a front side of the vehicle frame. At least part of the snow throwing mechanism is mounted between the first driving wheel 411L and the second driving wheel 411R, and the snow throwing mechanism is mounted on a front side of the front traveling wheel 412. Of course, in some examples, the mowing mechanism 80 may not be provided, for example, an outdoor traveling device is a utility vehicle. For convenience of reference, in the subsequent description, the mowing mechanism 80 is used for referring to the working mechanism.

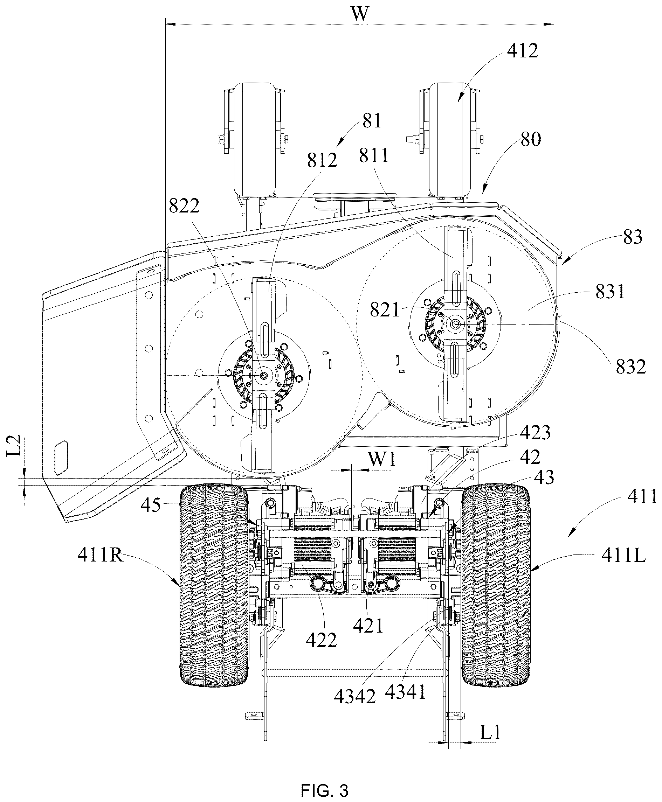

As shown in FIG. 3, the mowing mechanism 80 includes a mowing element for mowing grass and a mowing motor 82 for driving the mowing element. In this example, the mowing element is a mowing blade 81, and the mowing motor 82 is specifically configured to be a mowing electric motor. The mowing electric motor 82 is used subsequently instead of the mowing motor, which is not intended to limit the present invention.

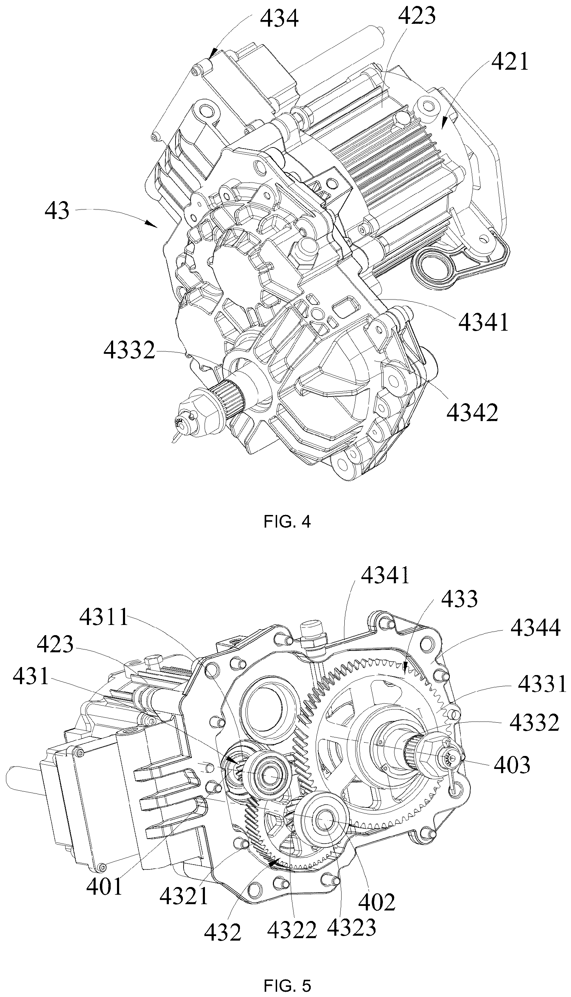

As shown in FIGS. 4 to 7, the driving mechanism 42 further includes a transmission assembly 43 connected between the first motor 421 and the first driving wheel 411L. The first motor 421 includes an output shaft 4211 that outputs power, and the output shaft 4211 rotates about a driving axis 101. The transmission assembly 43 is configured to convert or transmit torque outputted by the output shaft 4211 and transmit the torque to the first driving wheel 411L. In this example, the transmission assembly 43 includes at least a first gear set 431 that is driven by the output shaft 4211 and rotates about a first axis 401, a second gear set 432 that rotates about a second axis 402, and a third gear set 433 for transmitting power to the traveling wheel set 41. An included angle α between a line N that connects a projection of the first axis 401 and a projection of the second axis 402 on a first plane S1 and a line M that connects a projection of a third axis 403 and the projection of the second axis 402 on the first plane S1 is greater than or equal to 90° and less than 180°. A distance L between the projection of the first axis 401 and the projection of the third axis 403 on the first plane S1 is greater than 60 mm and less than 180 mm. The first plane S1 is substantially perpendicular to the first axis 401. In a first direction, the second axis 402 is located below the first axis 401. At least two of the first axis 401, the second axis 402, and the third axis 403 are configured to be parallel. The first gear set 431, the second gear set 432, and the third gear set 433 externally mesh for transmission. The middle gear set is staggered from the other gear sets, and the three gear sets are arranged in a "V" shape or a triangular shape as a whole. Optionally, the second axis 402 is located below the first axis 401 and the third axis 403. In a second direction perpendicular to the first direction, the gear sets that externally mesh and are arranged in this manner have a smaller size than the gear sets that are arranged in a linear shape. In this example, the first direction is an up and down direction, and the second direction is substantially a direction of a maximum cutting width of the mowing mechanism. In this example, the maximum cutting width W of the mowing mechanism is less than or equal to 40 inches. Compactness of the entire machine is ensured.

In this example, the driving mechanism 42 includes a motor housing 423 and a transmission housing 434. The first motor 421 is at least partially disposed in the motor housing 423, and the transmission assembly 43 is at least partially disposed in the transmission housing 434. The output shaft 4211 extends out of the motor housing 423 and extends into the transmission housing 434 to drive the first gear set 431. The transmission housing 434 includes a first housing 4341 and a second housing 4342. The first housing 4341 and the second housing 4342 are sealingly connected to each other to form an internal accommodating cavity. The first housing 4341 and the second housing 4342 are parted in a direction of the first axis 401. That is to say, a mounting surface 4344 where the first housing 4341 and the second housing 4342 are joined to each other is perpendicular to the first axis 401. In other words, when the first housing 4341 and the second housing 4342 are mounted on the vehicle frame 11, an open face of the first housing 4341 and an open face of the second housing 4342 are each vertically provided, and the first housing 4341 and the second housing 4342 form a clamshell structure. Peripheral portions of the open face of the first housing 4341 and the open face of the second housing 4342 are fastened to each other through bolts so that the internal accommodating cavity is formed. Two or more independent components may be connected to each other to form the motor housing 423 and the transmission housing 434, or one integral component may be formed as the motor housing 423 and the transmission housing 434. In some examples, the motor housing 423 and the transmission housing 434 may share some structures.

The first gear set 431 includes a first gear 4311, the first gear 4311 and the output shaft 4211 are disposed coaxially, and the first axis 401 coincides with the driving axis 101. In some examples, the first axis 401 and the driving axis 101 are parallel to each other and do not coincide. In some examples, the first axis 401 intersects with the driving axis 101 at a certain angle. The second gear set 432 includes a first transition gear 4321 that externally meshes with the first gear 4311 and a second transition gear 4322 that is coaxial with the first transition gear 4321. The second gear set 432 further includes a second gear shaft 4323. An axis of the second gear shaft 4323 is the second axis 402. The first transition gear 4321 and the second transition gear 4322 are coaxially sleeved on the second gear shaft 4323. The second axis 402 is configured to be parallel to the first axis 401. Exemplarily, the first gear 4311 and the first transition gear 4321 are each cylindrical gears, and a diameter of an addendum circle of the first transition gear 4321 is larger than a diameter of an addendum circle of the first gear 4311. The third gear set 433 includes a third gear 4331 and a third gear shaft 4332. The third gear 4331 externally meshes with the second transition gear 4322. An axis of the third gear shaft 4332 is the third axis 403. The third gear 4331 is sleeved on the third gear shaft 4332. Optionally, the third axis 403 is configured to be parallel to the second axis 402, and the first axis 401, the second axis 402, and the third axis 403 are arranged at three points of a triangle. Exemplarily, the second transition gear 4322 and the third gear 4331 are each cylindrical gears, and an addendum circle of the second transition gear 4322 is smaller than an addendum circle of the third gear 4331. Optionally, the addendum circle of the second transition gear 4322 is smaller than the addendum circle of the first transition gear 4321. In addition, the third gear 4331 has the largest addendum circle, and the third gear shaft 4332 is a power output end of the transmission assembly 43. Exemplarily, the third gear shaft 4332 is connected to the first driving wheel 411L. The transmission assembly 43 forms a speed reduction transmission as a whole, and a rotational speed of the output shaft 4211 of the first motor 421 is reduced through the transmission assembly 43 to form a rotational speed of the first driving wheel 411L.

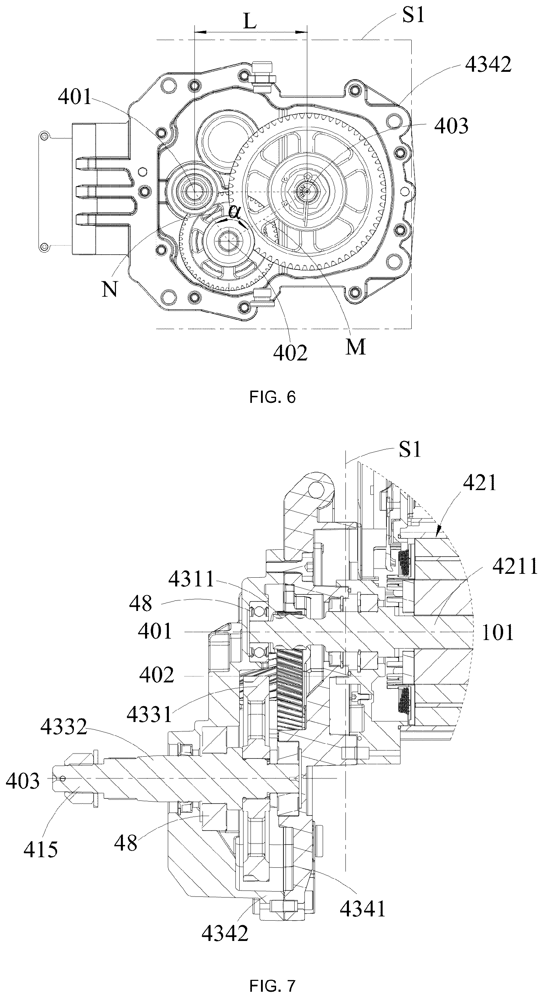

In this example, the driving mechanism 42 further includes the second motor 422 driving the second driving wheel 411R and a second transmission assembly 45 disposed between the second motor 422 and the second driving wheel 411R. The second motor 422 and the second transmission assembly 45 are disposed in mirror symmetry with the first motor 421 and the transmission assembly 43 mentioned above. Since the second motor 422 and the second transmission assembly 45 are disposed in mirror symmetry with the first motor 421 and the transmission assembly 43, an axis of a gear set of the second transmission assembly 45 is collinear with an axis of the gear set of the transmission assembly 43. Therefore, the second transmission assembly 45 also includes a first gear set 431 that is driven by an output shaft of the second motor 422 and rotates about a first axis 401, a second gear set 432 that rotates about a second axis 402, and a third gear set 433 for transmitting power to the traveling wheel set 41. As shown in FIG. 6, an included angle α between a line N that connects a projection of the first axis 401 and a projection of the second axis 402 on a first plane S1 and a line M that connects a projection of a third axis 403 and the projection of the second axis 402 on the first plane S1 is greater than or equal to 90° and less than 180°. A distance L between the projection of the first axis 401 and the projection of the third axis 403 on the first plane S1 is greater than 60 mm and less than 180 mm. The first plane S1 is substantially perpendicular to the first axis 401. In a first direction, the second axis 402 is located below the first axis 401. At least two of the first axis 401, the second axis 402, and the third axis 403 are configured to be parallel. The first gear set 431, the second gear set 432, and the third gear set 433 externally mesh for transmission. The middle second gear set 432 is staggered from the other gear sets (the first gear set 431 and the third gear set 433), and the three gear sets are arranged in a "V" shape or a triangular shape as a whole. In a second direction perpendicular to the first direction, the gear sets that externally mesh and are arranged in this manner have a smaller size than the gear sets that are arranged in a linear shape. The first axis 401 of the first gear set 431, the second axis 402 of the second gear set 432, and the third axis 403 of the third gear set 433 are pairwise parallel, but the three axes are not coplanar. The line N that connects the projection of the first axis 401 and the projection of the second axis 402 on the first plane S1, the line M that connects the projection of the third axis 403 and the projection of the second axis 402 on the first plane S1, and a line that connects the projection of the third axis 403 and the projection of the first axis 401 on the first plane S1 together form a triangle within the first plane.

In some alternative implementations, the driving mechanism 42 further includes the second motor 422 that drives the second driving wheel 411R and the second transmission assembly 45 disposed between the second motor 422 and the second driving wheel 411R. A central axis of the first driving wheel 411L is collinear with a central axis of the second driving wheel 411R. The second motor 422 and the second transmission assembly 45 are located on two sides of the central axis of the first driving wheel 411L separately, and the first motor 421 and the transmission assembly 43 mentioned above are located on two sides of the central axis of the second driving wheel 411R separately. The first motor 421 and the transmission assembly 43 mentioned above are mounted to a right side after rotating 180°. Structures with such different arrangements do not affect a position distribution of the gear sets in the second transmission assembly 45.

In this example, the distance L between the projection of the first axis 401 and the projection of the third axis 403 on the first plane S1 is greater than 60 mm and less than 180 mm. The distance L is adjusted and set according to the included angle α between the line N that connects the projection of the first axis 401 and the projection of the second axis 402 on the first plane S1 and the line M that connects the projection of the third axis 403 and the projection of the second axis 402 on the first plane S1, where $L =$ $\sqrt{{\left(\frac{{m}_{n 1}}{2 cos \left({β}_{1}\right)}\left({z}_{1}+{z}_{2}\right)\right)}^{2} + {\left(\frac{{m}_{n 2}}{2 cos \left({β}_{2}\right)}\left({z}_{3}+{z}_{4}\right)\right)}^{2} - \frac{{m}_{n 1} {m}_{n 2}}{2 cos \left({β}_{1}\right) cos \left({β}_{2}\right)} \left({z}_{1}+{z}_{2}\right) \left({z}_{3}+{z}_{4}\right) cos \left(α\right)}$.

In the formula, *m*_{*n*1} denotes a module of the first gear 4311 and a module of the first transition gear 4321, and *m*_{*n*2} denotes a module of the second transition gear 4322 and a module of the third gear 4331. According to technologies related to gear transmission, it is known that two meshing gears have identical modules, which is a basic requirement of the gear transmission, and calculation of a gear module is common knowledge. *z*₁ denotes the number of teeth of the first gear 4311, *z*₂ denotes the number of teeth of the first transition gear 4321, *z*₃ denotes the number of teeth of the second transition gear 4322, and *z*₄ denotes the number of teeth of the third gear 4331. *β*₁ denotes a helix angle of the first gear 4311 and a helix angle of the first transition gear 4321, and *β*₂ denotes a helix angle of the second transition gear 4322 and a helix angle of the third gear 4331.

The distance L between the projection of the first axis 401 and the projection of the third axis 403 on the first plane S1 and the included angle α between the line N that connects the projection of the first axis 401 and the projection of the second axis 402 on the first plane S1 and the line M that connects the projection of the third axis 403 and the projection of the second axis 402 on the first plane S1 are adjusted so that an overall output capability of the transmission assembly 43 is improved, and a compact gear transmission system is adapted to the output capability with high torque.

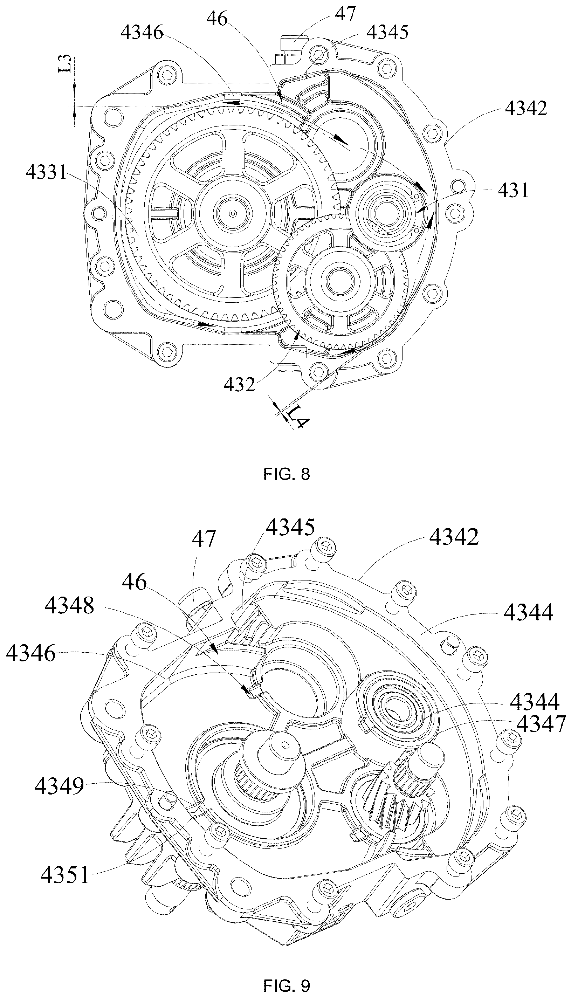

As shown in FIGS. 8 to 11, the transmission housing 434 further includes a guide member 46 and a pressure relief valve 47. The guide member 46 extends inward from a sidewall of the transmission housing 434 along a circumferential direction of a largest gear in the gear set and is disposed between the largest gear and the pressure relief valve 47. In this example, the largest gear is the third gear 4331. In this example, lubricating oil that lubricates the gear set is disposed in the transmission housing 434. When gears in the gear set rotate, the lubricating oil is thrown up by the gears. The guide member 46 is configured to smoothly guide the lubricating oil that is thrown up to a gear that needs to be lubricated, and the lubricating oil that is thrown up is not splashed onto inner walls of other positions of the transmission housing 434, thereby avoiding loss of the lubricating oil. Moreover, the guide member extends inward from the sidewall of the transmission housing 434 along the circumferential direction of the largest gear in the gear set, which ensures a compact structure between the guide member and the gear and does not increase a volume of the transmission housing. The pressure relief valve 47 is configured to adjust air pressure in the transmission housing 434, which ensures normal running of the transmission housing 434 and prolongs a service life of transmission housing 434. When the gear set works, due to friction of components such as the gears and bearings and thermal expansion and contraction of the lubricating oil, an internal temperature and internal air pressure may change. Therefore, the pressure relief valve balances the air pressure inside the transmission housing 434 and air pressure outside the transmission housing 434 by releasing excessive gas or sucking external air, so as to avoid excessive air pressure and negative pressure inside. In addition, the pressure relief valve reduces a risk of lubricating oil leakage and ensures sufficient lubrication inside the transmission housing 434 by adjusting the air pressure.

The pressure relief valve 47 is disposed on a wall of the transmission housing corresponding to the gear with a maximum size. In this example, the pressure relief valve 47 is disposed on a surface of the transmission housing 434 at a periphery of the third gear 4331. In this example, when mounted on the vehicle frame 11, the pressure relief valve 47 is disposed on a highest surface of the transmission housing 434. Gas (such as air or a mixture of oil and gas) inside the transmission housing 434 typically rises to a top. Therefore, the pressure relief valve 47 disposed at the top can release the excessive gas more effectively.

In some examples, the first gear set 431, the second gear set 432, and the third gear 4331 are all mounted on the second housing 4342, and the first housing 4341 is connected to the motor housing 423. The guide member 46 with a sidewall protruding inward is formed on the second housing 4342. In some alternative examples, the guide member 46 includes a right half disposed on the first housing 4341 and a left half disposed on the second housing 4342. When the first housing 4341 and the second housing 4342 are joined, the left half of the guide member 46 and the right half of the guide member 46 abut against each other and are joined to form the complete guide member 46.

The guide member 46 extends inward from a sidewall of the second housing 4342 along a circumferential trajectory of the third gear 4331. The guide member 46 forms a guide rib on the inner sidewall of the second housing 4342 and extends downward along the circumferential direction of the third gear 4331. The inner sidewall of the second housing 4342 includes a first side surface 4345 and a second side surface 4346. The first side surface 4345 is provided on an inner wall surface of the transmission housing 434 on which a gear shaft for positioning an electric motor is located. The second side surface 4346 is provided on an inner wall surface of a housing on a peripheral side of the third gear 4331. The second side surface 4346 is connected to a side surface of the guide member 46. In this example, the first side surface 4345 is mainly located on an inner wall surface of the transmission housing 434 on a peripheral side of the first transition gear 4321. Exemplarily, a distance L3 between the second side surface 4346 and a tooth tip of the third gear 4331 is greater than or equal to 2 mm and less than or equal to 20 mm. A distance L4 between the first side surface 4345 and a tooth tip of the first transition gear 4321 is greater than or equal to 2 mm and less than or equal to 20 mm. When a driving motor rotates counterclockwise, the output shaft rotates counterclockwise to ensure that the lubricating oil can flow along a direction of the second side surface 4346 and ensure fluidity of the lubricating oil. As shown in FIG. 8, dotted lines indicate an oil path of the lubricating oil when the driving motor rotates clockwise, and solid lines indicate an oil path of the lubricating oil when the driving motor rotates counterclockwise.

The transmission assembly 43 further includes bearings 48 for supporting rotations of shafts in the gear set. Support portions 4347 for mounting the bearings 48 is formed on the transmission housing 434. Oil slots 4348 are provided on the support portions 4347 to cause the lubricating oil in the transmission housing 434 to lubricate the bearings 48 through the oil slots 4348. In this example, the oil slots 4348 are configured to be slot structures with certain widths and depths on the transmission housing 434. The lubricating oil that is thrown up is accumulated in the slot structures, and lowest points of bottoms of the slots are connected to the support portions 4347 so that the lubricating oil accumulated in the oil slots 4348 is supplied to the gears and the bearings 48 through centrifugal oil throwing and gravity backflow during running.

In this example, the transmission assembly 43 includes the multiple bearings 48 configured to support at least the output shaft 4211, the second gear shaft 4323, and the third gear shaft 4332. Correspondingly, the multiple support portions 4347 and the multiple oil slots 4348 are also provided. In some examples, each support portion 4347 is provided with at least one oil slot 4348. Exemplarily, the oil slots 4348 include a first oil slot 4349 provided on the first housing 4341 and a second oil slot 4350 provided on the second housing 4342. In some examples, the first oil slot 4349 and the second oil slot 4350 are symmetrically provided. In some examples, the first oil slot 4349 and the second oil slot 4350 are separately provided. The first oil slot 4349 and the second oil slot 4350 may be symmetrically disposed partially and may be staggered partially. For structures of the oil slots 4348, at least part of the multiple oil slots 4348 are provided with slot structures on an inner wall surface of the transmission housing 434, and the slot structures communicate with the support portions 4347. The slots have bottom walls 4351, the bottom walls 4351 have inclinations with certain depths, and lowest positions of the inclinations of the bottom walls 4351 are connected into the support portions 4347. Exemplarily, when the support portions 4347 are configured to be ribs protruding from a surface of the sidewall, the oil slots 4348 are configured to be slot structures for disconnecting the ribs. The slots communicate with the support portions 4347, and the lowest positions of the inclinations of the bottom walls 4351 of the slots are connected into the support portions 4347.

In some examples, at least part of the multiple bearings 48 are open bearings. The open bearings refer to structures of the bearings 48 without sealing rings or dust covers. The open bearings are low in cost. This design allows insides of the bearings 48 to be in direct contact with an external environment. Under a working condition of high-speed running, the open bearings can effectively reduce running resistances, reduce a heat generation amount, and increase limit rotational speeds of the bearings 48. In addition, in a case where frequent lubrication is required, the open bearings facilitate addition and replacement of lubricants and are conducive to maintaining good lubrication states of the bearings 48. Moreover, in a high-temperature working environment, the open structures are conducive to heat dissipation, preventing the bearings 48 from being damaged due to an excessive temperature.

In some examples, the oil slots 4348 are provided not only on the transmission housing 434 but also on the output shaft 4211, for example. An oil slot 4348 is a slot provided in a spiral line along an axial direction of the output shaft 4211. Exemplarily, an oil slot 4348 is also provided on the gear shaft, and the oil slot 4348 is a slot provided in a spiral line along an axial direction of the gear shaft. Exemplarily, the oil slots 4348 on the transmission housing 434, the oil slot 4348 on the output shaft 4211, and the oil slot 4348 on the gear shaft may be provided in combination or separately.

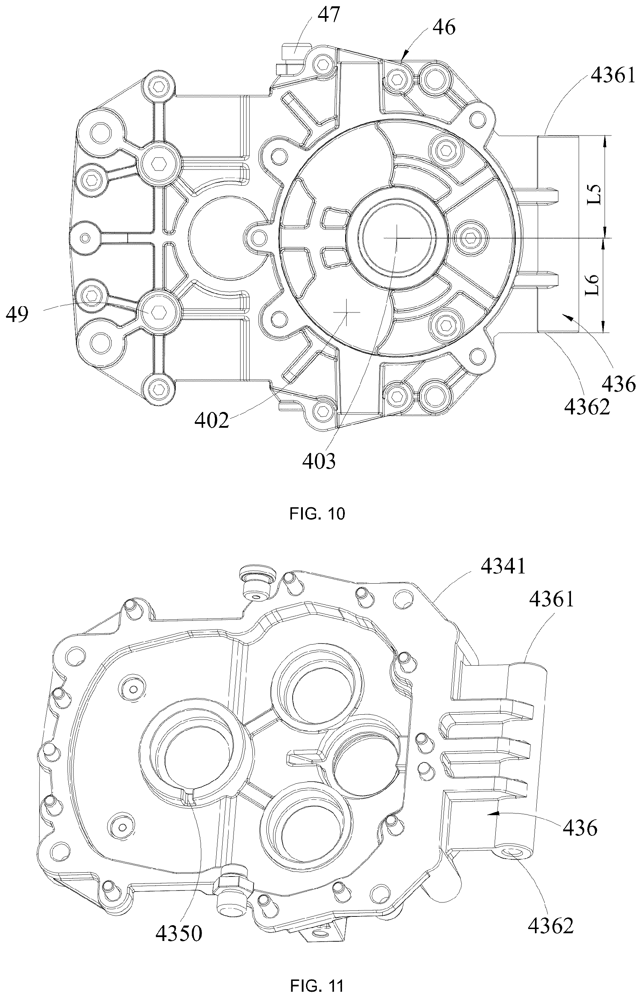

As shown in FIG. 10, an oil filling hole 49 is further provided on the transmission housing 434. The oil filling hole 49 is configured for filling lubricating oil into the transmission housing 434 when the lubricating oil is insufficient. The oil filling hole 49 is configured to be a through hole that penetrates through the transmission housing 434. Exemplarily, a center line of the oil filling hole 49 is parallel to the second axis 402. When mounted on the vehicle frame 11, the oil filling hole 49 is located below the second axis 402 and is lower than the second axis 402. It is convenient to supplement the oil from an outside of the device through the oil filling hole 49 provided at a low position. In addition, the lubricating oil can be firstly filled in a bottom oil slot area through the oil filling hole 49, and oil mist and splashing lubrication are formed under action of stirring the oil by the meshing gears. Thus, upper tooth surface coverage is indirectly implemented, it can be ensured that the lubricating oil can fully cover moving components that need to be lubricated, and natural lubrication is implemented through gravity action. When a liquid level of the lubricating oil reaches the position of the oil filling hole 49, redundant lubricating oil naturally overflows to form a visual liquid level indication, and the operator can intuitively determine an amount of lubricating oil to be filled and does not need other measurement tools. This design avoids a possible error in a traditional quantitative oil filling mode and improves lubrication reliability. The operator only needs to continuously fill the lubricating oil through the oil filling hole 49 and can stop filling the lubricating oil until the operator views a start of overflow of the lubricating oil from the hole. This method is simple and intuitive, reducing operation difficulty. In addition, this design also considers lubrication requirements of the device under different working conditions and can ensure that key components are fully lubricated even in a case where the device inclines or vibrates. Exemplarily, a dust cover or a one-way valve is disposed at an outer end of the oil filling hole 49 to prevent dust and impurities from entering the transmission housing 434 and maintain sealing performance of a lubrication system.

The transmission housing 434 is further provided with a hanging portion 436, and the hanging portion 436 is connected to the vehicle frame 11 to fix the transmission assembly 43. The hanging portion 436 includes a first interface 4361 and a second interface 4362. The first interface 4361 is used for connecting the vehicle frame 11 when the transmission housing 434 is mounted to a left side, and the second interface 4362 is used for connecting the vehicle frame 11 when the transmission housing 434 is mounted to a right side. The first interface 4361 and the second interface 4362 are disposed on two sides of a center line of a driving wheel. A distance L5 from the first interface 4361 to the center line of the driving wheel is different from a distance L6 from the second interface 4362 to the center line of the driving wheel. In this example, a distance from the first interface 4361 to the third axis 403 is different from a distance from the second interface 4362 to the third axis 403. In this example, the transmission assembly 43 corresponding to the first driving wheel 411L cannot be used on a side of the second driving wheel 411R through overturning. The vehicle frame 11 is provided with a first joint matched with the first interface 4361 and a second joint corresponding to the second interface 4362. To ensure consistent heights of central axes of the first driving wheel 411L and the second driving wheel 411R, the first joint and the second joint also have different heights to correspond to the first interface 4361 and the second interface 4362.

As shown in FIGS. 1 to 3, the first driving wheel 411L and the second driving wheel 411R are disposed on two sides of the vehicle frame 11, respectively. The first driving wheel 411L and the second driving wheel 411R are designed substantially in mirror symmetry, and sizes and structures of the first driving wheel 411L and the second driving wheel 411R are substantially the same. For convenience of description, the first driving wheel 411L is used as an example. In some examples, the first driving wheel 411L is an inflatable wheel constituted by a tire 413 and a hub 414. In some examples, the first driving wheel 411L is an integrated wheel made of a high polymer. A structure of the wheel is not limited to a certain form. An axle 415 exists at a center of the first driving wheel 411L. In this example, the axle 415 is coaxial with the third gear shaft 4332 of the third gear 4331, and the third gear shaft 4332 is connected to the axle 415 after extending out of the transmission housing 434 or is directly connected to the first driving wheel 411L instead of the axle 415. In this example, a distance L1 from the mounting surface 4344 of the first housing 4341 and the second housing 4342 in the transmission housing 434 to the first driving wheel 411L is greater than or equal to 10 mm and less than or equal to 110 mm. In some examples, the distance L1 from the mounting surface 4344 of the first housing 4341 and the second housing 4342 in the transmission housing 434 to the first driving wheel 411L is greater than or equal to 10 mm and less than or equal to 100 mm. In some examples, the distance L1 from the mounting surface 4344 of the first housing 4341 and the second housing 4342 in the transmission housing 434 to the first driving wheel 411L is greater than or equal to 10 mm and less than or equal to 90 mm. In some examples, the distance L1 from the mounting surface 4344 of the first housing 4341 and the second housing 4342 in the transmission housing 434 to the first driving wheel 411L is greater than or equal to 10 mm and less than or equal to 80 mm. In some examples, the distance L1 from the mounting surface 4344 of the first housing 4341 and the second housing 4342 in the transmission housing 434 to the first driving wheel 411L is greater than or equal to 10 mm and less than or equal to 70 mm. In some examples, the distance L1 from the mounting surface 4344 of the first housing 4341 and the second housing 4342 in the transmission housing 434 to the first driving wheel 411L is greater than or equal to 10 mm and less than or equal to 60 mm.

In this example, the first motor 421, the transmission assembly 43, and the first driving wheel 411L are sequentially arranged from a middle of the vehicle frame 11 to an edge of the vehicle frame 11, and the transmission housing 434 at least partially extends into a cavity formed in the center of the first driving wheel 411L. The distance L1 from the mounting surface 4344 of the first housing 4341 and the second housing 4342 in the transmission housing 434 to the first driving wheel 411L is set to be greater than or equal to 10 mm and less than or equal to 110 mm, which ensures a compact width of the entire machine. The lower limit value of the size is small enough, which ensures compactness with which the transmission assembly 43 and the first driving wheel 411L are assembled. In addition, within the preceding size range, the first driving wheel 411L can be prevented from colliding with the transmission assembly 43 or even the first motor 421 when the tire 413 of the first driving wheel 411L is flattened.

In some examples, a distance W1 between the first motor 421 and the second motor 422 is greater than 10 mm and less than or equal to 30 mm. In some examples, the distance W1 between the first motor 421 and the second motor 422 is greater than 10 mm and less than or equal to 25 mm. The distance W1 between the first motor 421 and the second motor 422 is greater than 10 mm and less than or equal to 20 mm.

In this example, the mowing mechanism 80 includes multiple mowing blades 81 and mowing electric motors 82 driving the mowing blades 81, respectively. That is to say, the number of the provided mowing electric motors 82 corresponds to the number of the mowing blades. In some examples, the mowing mechanism 80 includes multiple mowing blades 81 and the mowing electric motor 82 for driving the mowing blades 81. One mowing electric motor 82 is provided, or the number of mowing electric motors 82 is less than the number of the mowing blades 81. That is to say, one mowing electric motor 82 may drive the multiple mowing blades 81. Exemplarily, the mowing mechanism 80 includes a first blade 811 and a second blade 812 that are configured to be adjacent to each other, a first mowing electric motor 821 driving the first blade 811, and a second mowing motor 822 driving the second blade 812. The mowing mechanism 80 further includes a cutting deck 83 covering the mowing blades. The cutting deck 83 accommodates at least part of each of the mowing blades 81. The cutting deck 83 includes a top wall 831, a sidewall 832 extending downward from the top wall 831 and forming a circumferential enclosure, and an opening facing downward. The mowing electric motor 82 is disposed on the top wall 831, and an output shaft 4211 of the mowing electric motor 82 drives the mowing blades after passing through the top wall 831. It is to be explained that the maximum cutting width W of the mowing mechanism 80 does not depend on a width of the cutting deck 83. The maximum cutting width W of the mowing mechanism 80 is a maximum transverse width of grass that can be covered by the first blade 811 and the second blade 812 during rotation. The maximum cutting width W of the mowing mechanism 80 is less than or equal to 40 inches. In some examples, the maximum cutting width W of the mowing mechanism 80 is less than or equal to 36 inches. In this example, the distance L1 from the mounting surface 4344 of the first housing 4341 and the second housing 4342 in the transmission housing 434 to the first driving wheel 411L is greater than or equal to 10 mm and less than or equal to 110 mm. In this example, a maximum width distance between two driving wheels is less than the width of the cutting deck 83. The width of the entire machine is more allocated to the cutting width so that a larger cutting width is ensured without changing the width of the entire machine.

In this example, the cutting deck 83 is disposed on a front side of the driving mechanism 42, and the mowing blades 81 are disposed between the front traveling wheel 412 and the rear traveling wheel 411. In the front and rear direction, a minimum distance L2 between the motor housing 423 and the cutting deck 83 is greater than or equal to 20 mm and less than or equal to 70 mm.

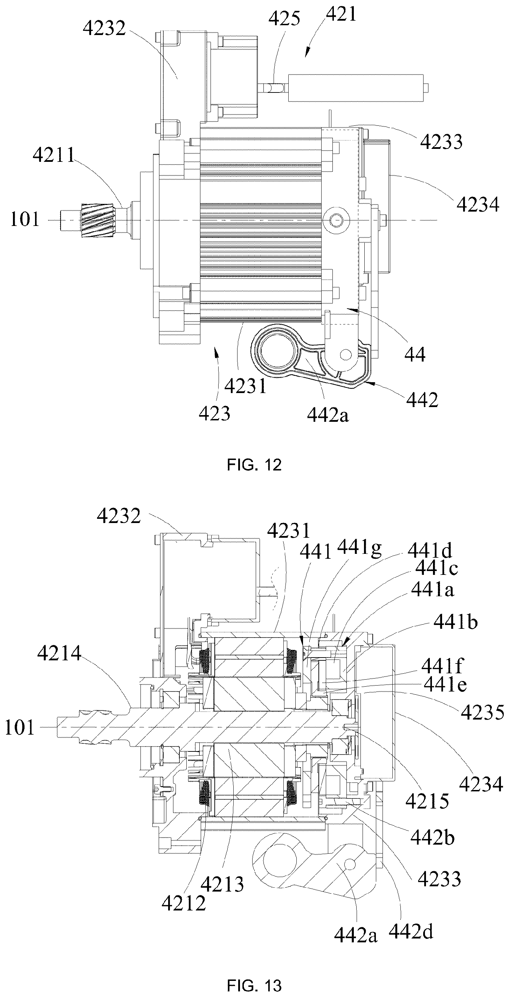

As shown in FIGS. 12 and 13, the vehicle body 10 further includes a parking brake mechanism 44, and the parking brake mechanism 44 brakes rotation of the output shaft 4211 of the traveling motor. The parking brake mechanism 44 is configured to be an electromagnetic brake mechanism. Optionally, the electromagnetic brake mechanism is an electromagnetic brake 441. The electromagnetic brake 441 is used below instead of the electromagnetic brake mechanism, which is not intended to limit the present application. The electromagnetic brake 441 is configured to brake the rotation of the output shaft 4211. For example, when de-energized, the electromagnetic brake 441 automatically brakes the rotation of the output shaft 4211. For example, when the stand-on mower 100 is powered off, the electromagnetic brake 441 automatically brakes the rotation of the output shaft 4211. Thus, the traveling motor outputs no power to the driving wheels, and the rotation of the driving wheels is braked. The electromagnetic brake 441 is provided so that the timelier and safer parking brake solution is implemented in an emergency. The electromagnetic brake 441 does not rely on a manual operation and actively brakes the output shaft 4211 of the motor when de-energized, achieving the timelier and more reliable braking.

The parking brake mechanism 44 includes a manual release assembly 442. The manual release assembly 442 is operated by the user to manually release the braking of the electromagnetic brake 441 or drive the electromagnetic brake 441 to brake the output shaft 4211. Thus, when the electromagnetic brake 441 cannot be started or closed for some reasons, the user can manually perform the braking and release the braking. For example, the stand-on mower 100 is powered off, and the electromagnetic brake 441 is de-energized to brake the output shaft 4211. After the stand-on mower 100 is started and energized, the electromagnetic brake 441 is also energized to be started so as to stop braking the output shaft 4211. After the driving mechanism 42 receives a drive signal in an operation instruction, the output shaft 4211 rotates, and the stand-on mower 100 travels normally. However, if the electromagnetic brake 441 fails to be energized and started for some reasons after the stand-on mower 100 is energized, the user may manually start the electromagnetic brake 441 through the manual release assembly 442 so that the electromagnetic brake 441 releases the braking of the output shaft 4211, and the stand-on mower 100 can travel normally.

In this example, at least part of the parking brake mechanism 44 is disposed in the motor housing 423. For example, the electromagnetic brake 441 is disposed in the motor housing 423, and the electromagnetic brake 441 is disposed on a side of the motor facing away from the transmission assembly 43. Structures on a side of the first motor 421 are used as an example, and the first motor 421 includes a stator winding 4212 and a rotor 4213. In some examples, the first motor 421 is a three-phase brushless motor, and the output shaft 4211 is formed on or connected to the rotor 4213. A first end 4214 of the output shaft extends out of the rotor 4213 and is connected to the transmission assembly 43, and a second end 4215 of the output shaft extends out of the rotor 4213 and is connected to the parking brake mechanism 44. Exemplarily, the motor housing 423 includes a body portion 4231 accommodating the stator winding 4212, a front end cover 4232 disposed at the first end 4214 of the output shaft, and a rear end cover 4233 disposed at the second end 4215 of the output shaft. At least part of the parking brake mechanism 44 is disposed in an accommodating space formed by the body portion 4231 and the rear end cover 4233. The electromagnetic brake 441 is disposed in the rear end cover 4233, and the manual release assembly 442 is at least partially disposed outside the rear end cover 4233 to facilitate an operation of the user. A rear side of the rear end cover 4233 further includes a rear sealing end cover 4234, and a sensor is disposed in the rear sealing end cover 4234 to detect a position of the rotor 4213. In this example, an eddy current sensor 4235 is disposed in the rear sealing end cover 4234.

The electromagnetic brake 441 includes an electromagnet 441a, a pressure plate 441f, a brake pad 441e, and a fixing plate 441g. The electromagnet 441a includes a housing 441b, a coil 441c, and at least one spring 441d, and the fixing plate 441g is connected to the housing 441b. Optionally, the fixing plate 441g and the housing 441b are fixedly connected to each other at a certain interval. The fixing plate 441g is fixedly connected to the second end 4215. An accommodating cavity is provided in the housing 441b, and the accommodating cavity is used for accommodating the coil 441c and the spring 441d. The pressure plate 441f and the brake pad 441e are disposed in an area between the fixing plate 441g and the housing 441b. The brake pad 441e is connected to the output shaft 4211. Optionally, the brake pad 441e is slidably connected to the output shaft 4211, and the brake pad 441e applies a frictional force to the output shaft 4211 along a circumferential direction, so as to brake the output shaft 4211.

The pressure plate 441f is magnetically attracted. After the coil 441c in the electromagnet 441a is energized to generate electromagnetism, the pressure plate 441f is attracted by the electromagnet 441a. The electromagnet 441a and the brake pad 441e are located on two sides of the pressure plate 441f, respectively. When the pressure plate 441f is attracted by the electromagnet 441a, the pressure plate 441f approaches the electromagnet 441a and moves away from the brake pad 441e. The pressure plate 441f is located at a second position, and the brake pad 441e substantially applies no frictional force to the output shaft 4211 or applies a frictional force that does not brake the output shaft 4211. In this case, it is defined that the electromagnetic brake 441 is in a second state. When the electromagnetic brake 441 is in the second state, the output shaft 4211 rotates according to an operation instruction signal received by the electric motor. When the pressure plate 441f is attracted to be in contact with the electromagnet 441a, the pressure plate 441f compresses the spring 441d in the electromagnet 441a, and the spring 441d is subjected to pressure and stores energy.

When the electromagnetic brake 441 is de-energized, the coil 441c is de-energized and loses electromagnetism, and the pressure plate 441f loses a magnetic attraction force of the electromagnet 441a and is pushed toward the brake pad 441e by energy released by the spring 441d. Since the spring 441d applies a sufficiently large pushing force, the pressure plate 441f moves away from the electromagnet 441a and presses against the brake pad 441e. The pressure plate 441f is located at a first position. When the pressure plate 441f is located at the first position, the frictional force applied by the brake pad 441e to the output shaft 4211 is increased to brake the output shaft 4211. In this case, it is defined that the electromagnetic brake 441 is in a first state.

The manual release assembly 442 is operated to control a distance between the pressure plate 441f and the brake pad 441e. The manual release assembly 442 includes a handle 442a and a connecting portion 442b. The handle 442a is operated by the user, and the user moves the pressure plate 441f from the first position to the second position by rotating, pushing or pulling, or toggling the handle 442a. The handle is located at a braking position, and the pressure plate 441f is located at the first position. The handle is located at an unlocking position, and the pressure plate 441f is located at the second position. The handle 442a is fixedly connected to the pressure plate 441f through the connecting portion 442b, and a linkage rod 442d is disposed between the handle 442a and the connecting portion 442b. According to the lever principle, the handle 442a drives the connecting portion 442b to move up and down. To be operated by the user, at least part of the handle 442a extends out of a gearbox 451 and is exposed outside the vehicle body 10.

In this implementation, when the electromagnetic brake 441 is de-energized, the pressure plate 441f is located at the first position, and the frictional force applied by the brake pad 441e to the output shaft 4211 is increased to brake the output shaft 4211. However, after the stand-on mower 100 is energized, the electromagnet 441a does not generate an electromagnetic force to attract the pressure plate 441f to the second position. In this case, the user operates the handle 442a to the unlocking position so as to move the pressure plate 441f from the first position to the second position. When an operation force of the user is released, the handle 442a can still remain at the unlocking position to cause the pressure plate 441f to remain at the second position. The pressure plate 441f is manually moved away from the brake pad 441e, and the brake pad 441e releases the braking of the output shaft 4211.

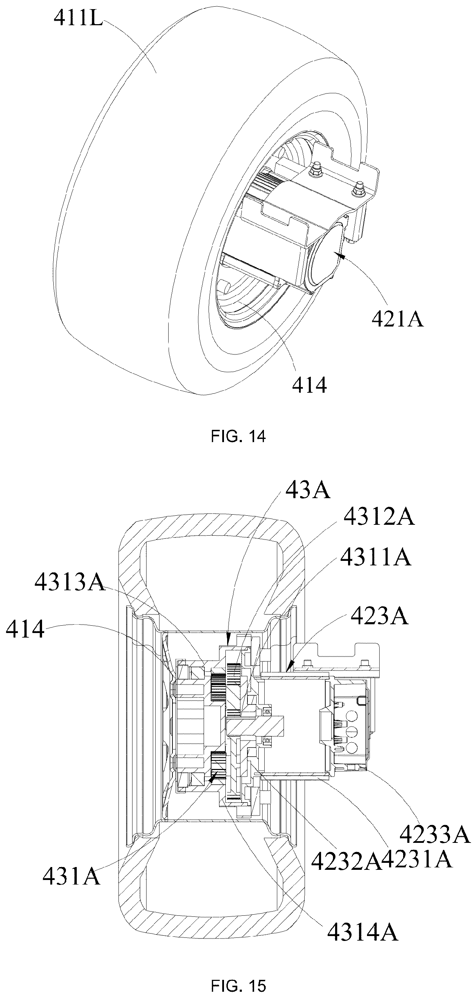

As shown in FIGS. 14 and 15, as another example of the present application, each of a first motor 421A and a second motor is a wheel motor. A cavity for accommodating a transmission assembly 43A or the transmission assembly 43A and the motor is configured in a center of each of the first driving wheel 411L and the second driving wheel. Structures on a side of the first driving wheel 411L are used as an example. The first motor 421A is the wheel motor. The transmission assembly 43A includes a planetary gear set 431A. A motor housing 423A includes a body portion 4231A for accommodating a stator winding, a front end cover 4232A disposed at a first end (close to the hub 414 of the driving wheel driven by an output shaft) of the output shaft, and a rear end cover 4233A disposed at a second end (away from the driving wheel driven by the output shaft) of the output shaft.

The planetary gear set 431A includes a sun gear 4311A, a planet gear 4312A, an output planet carrier 4313A, and an inner ring gear 4314A. The sun gear 4311A is directly formed on or connected to the output shaft 4211 of the first motor 421A, serving as a starting point for power input. Multiple planet gears 4312A are provided. The multiple planet gears 4312A are typically mounted on the planet carrier through symmetric distribution to form one or more stages of speed reduction transmission. The multiple planet gears 4312A are provided to form the one or more stages of speed reduction transmission. The inner ring gear 4314A is disposed on outer sides of the planet gears 4312A and meshes with the planet gears 4312A. Planet carriers support the planet gears 4312A. In this example, a last-stage planet carrier outputs power to the hub 414 of the first driving wheel 411L, and the planet carrier supporting a last-stage planet gear 4312A is the output planet carrier 4313A. Optionally, the output planet carrier 4313A is connected to the hub 414. The inner ring gear 4314A is fixedly connected to the motor housing 423A. In some examples, the inner ring gear 4314A is fixed on the motor housing 423A, or a relative speed between the inner ring gear 4314A and the motor housing 423A is zero. For example, the inner ring gear 4314A and the motor housing 423A rotate synchronously, or the inner ring gear 4314A and the motor do not rotate. This design has significant advantages over a solution in the existing art in which the inner ring gear 4314A drives the hub 414 to rotate. First, the inner ring gear 4314A is fixedly connected to the motor housing 423A, which can effectively reduce mechanical vibration and noise and improve stability of a system. Secondly, this connection manner simplifies design of a sealing structure and reduces a risk of oil leakage, thereby prolonging a service life of the transmission system.

In some examples, the driving mechanism 42 may be a hub motor. The hub motor is mounted on the driving wheel to drive the driving wheel to rotate. A structure of the hub motor can further simplify the transmission system, reduce the number of mechanical components, and improve reliability and efficiency of the system. The hub motor typically includes a stator and a rotor. The stator is fixed to the hub 414 of the wheel, and the rotor 4213 is directly connected to the wheel. Under action of an electromagnetic force, the rotor 4213 drives the wheel to rotate, thereby driving the vehicle.

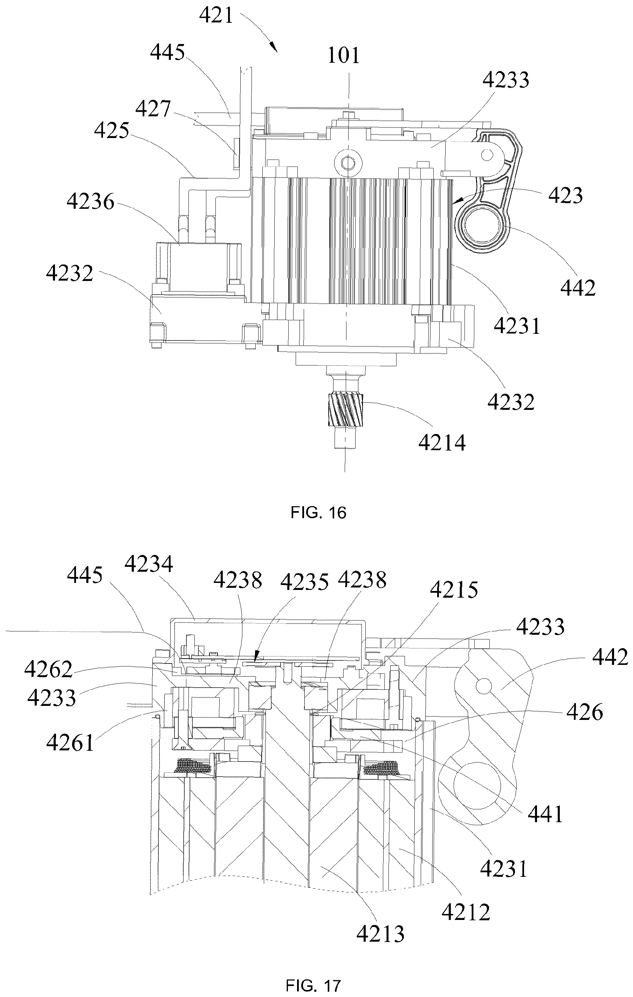

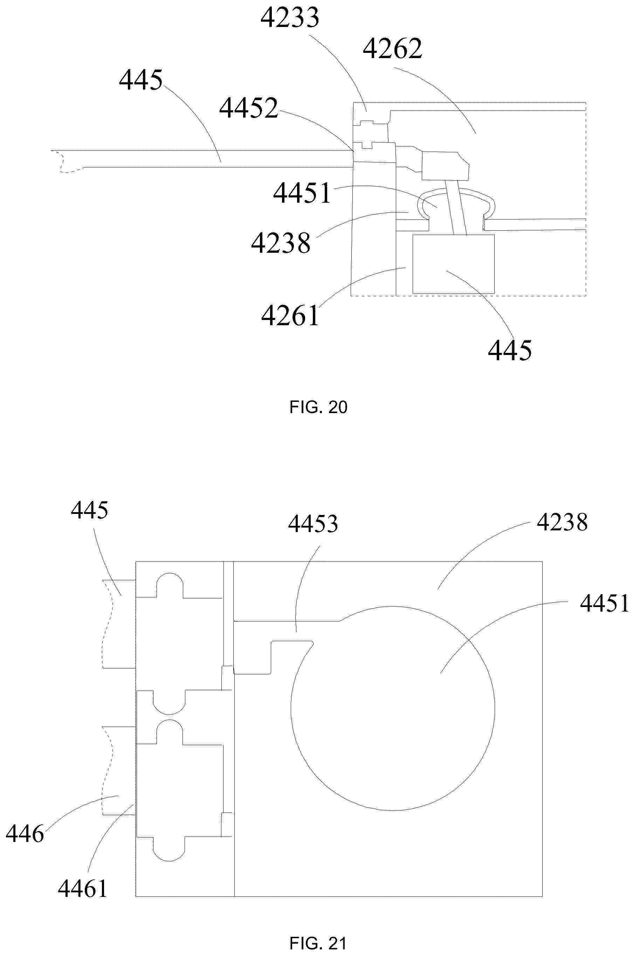

As shown in FIGS. 16 to 20, the structures on the side of the first motor 421 are used as the example. The first motor 421 further includes the motor housing 423. The motor housing 423 includes the body portion 4231 accommodating the stator winding 4212, the front end cover 4232 disposed at the first end 4214 of the output shaft, and the rear end cover 4233 disposed at the second end 4215 of the output shaft. The front end cover 4232 is disposed on a side closer to the transmission assembly 43. The at least part of the parking brake mechanism 44 is disposed in the motor housing 423. The electromagnetic brake 441 is disposed in the motor housing 423 and disposed on the side of the first motor 421 facing away from the transmission assembly 43. The electromagnetic brake 441 is disposed on a side of the motor housing 423 closer to the rear end cover 4233. The second end 4215 of the output shaft extends out of the rotor 4213 and is connected to the parking brake mechanism 44. In this example, the body portion 4231, the rear end cover 4233, and the stator winding 4212 form the accommodating space 426, and the at least part of the parking brake mechanism 44 is disposed in the accommodating space 426.

As shown in FIGS. 17, 20, and 21, the rear end cover 4233 is provided with a partition portion 4238. The partition portion 4238 divides the rear end cover 4233 into two parts along the axial direction. An opening on a first side of the partition portion 4238 faces the stator winding 4212. The first side of the partition portion 4238, the body portion 4231, and the stator winding 4212 form a first accommodating space 4261, and the at least part of the parking brake mechanism 44 is disposed in the first accommodating space 4261. An opening on a second side of the partition portion 4238 faces the outside. The rear sealing end cover 4234 is disposed on the second side of the partition portion 4238 so that the second side of the partition portion 4238 forms a second accommodating space 4262, and the sensor is disposed in the second accommodating space 4262 and is used for detecting the position of the rotor 4213. Components of the eddy current sensor 4235 are mounted in the second accommodating space 4262 of the electric motor and used for precisely detecting the position of the rotor of the electric motor. The eddy current sensor 4235 is isolated and disposed in the independent second accommodating space 4262 through the partition portion 4238 so that interference caused by a high current flowing through a three-phase power line of the electric motor to a signal of the eddy current sensor 4235 is reduced. Thus, the electromagnetic interference of a high-current loop to the sensing signal is effectively inhibited, and precision and reliability with which the position of the rotor is detected are improved. In addition, function integration of instant braking upon power-off and running state monitoring is implemented, and safety and control response performance of an electric motor system are enhanced.

In this example, the eddy current sensor 4235 is disposed in the rear sealing end cover 4234. The manual release assembly 442 is at least partially disposed outside the rear end cover 4233 to facilitate the operation of the user.

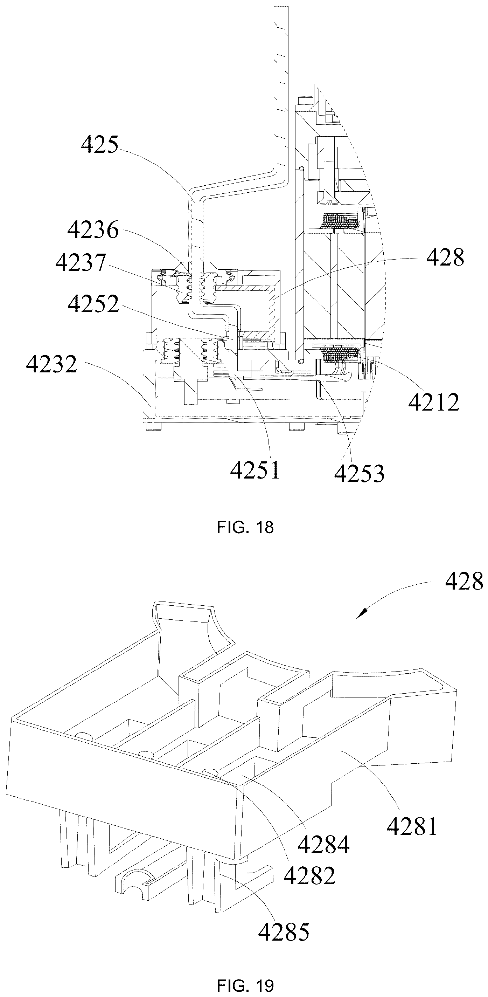

As shown in FIGS. 16 and 18, the front end cover 4232 is provided with a wire outlet 4236, and a first cable 425 of the first motor 421 is led into and out of the body portion 4231 through the front end cover 4232. A central axis of the wire outlet 4236 is parallel to the driving axis 101 of the output shaft 4211. Exemplarily, a direction in which the first cable 425 is led out is parallel to the driving axis 101 of the output shaft 4211. The first cable 425 extends to an outer side of the front end cover 4232 and then extends toward the rear end cover 4233. The first cable 425 further includes a direction-changing terminal 4251. In this example, a first wire 4252 and a winding wire 4253 are connected to each other through the direction-changing terminal 4251. The winding wire 4253 led out from the stator winding 4212 extends into the front end cover 4232 along a radial direction of the front end cover. The direction-changing terminal 4251 connects the first wire 4252 to the winding wire 4253 and changes a wiring direction of the first wire 4252. The wiring direction of the first wire 4252 is changed such that the first wire 4252 extends along the axial direction of the output shaft 4211, and then the first wire 4252 extends out of the front end cover 4232 from the wire outlet 4236. The direction-changing terminal 4251 includes an L-shaped connector or a 90-degree terminal. For example, the first wire 4252 extends to the outer side of the front end cover 4232 through the wire outlet 4236.

The wire outlet 4236 is configured to be a through hole. Each of the wire outlet 4236 and the cable 425 is provided with a sealing gasket 4237, and a gap between the wire outlet 4236 and the cable 425 is filled with sealing gaskets 4237. The sealing gasket 4237 is a tubular sealing gasket 4237 having a certain thickness and a certain length. Since the cable 425 passes through a center of the sealing gasket 4237, a good sealing effect is ensured.

As shown in FIGS. 18 and 19, a wiring assembly 428 is disposed in the front end cover 4232. The wiring assembly 428 includes a terminal block 4281, a wiring terminal 4282, and a wiring nut. The terminal block 4281 is provided with a wire guide slot 4284, and the winding wire 4253 is accommodated in the guide slot 4284 separately. Optionally, each of multiple winding wires 4253 is provided with a guide slot 4284 independently. The winding wire 4253 is connected to a lead-out terminal. The lead-out terminal and the direction-changing terminal 4251 are fixed on the terminal block 4281 through the wiring terminal 4282 and the wiring nut.

The guide slot 4284 further includes an extension portion 4285. The extension portion 4285 restricts the wiring direction of the first wire 4252 so that the first wire 4252 is concentric with a hole of the sealing gasket 4237 when the first wire 4252 enters the sealing gasket 4237. The terminal block 4281 has a limited space in the front end cover 4232, and an axis of the first wire 4252 led out from the direction-changing terminal 4251 and the inner hole of the sealing gasket 4237 are disposed eccentrically, which causes deformation of the sealing gasket and affects the sealing effect. In this example, the extension portion 4285 is used for restricting the direction in which the first wire 4252 is led out, thereby avoiding the deformation of the sealing gasket caused by inclined penetration of the inner wire. In addition, based on this design idea, multiple implementation solutions may be derived by adjusting a shape, a layout position, and the like of the extension portion 4285, to adapt to different electric motor structures or space requirements and ensure mating precision and sealing reliability of the inner wire and the sealing gasket.

As shown in FIG. 16, at least one fixing portion 427 is disposed on the body portion 4231 and/or the rear end cover 4233. The fixing portion 427 causes the first cable 425 to remain on the body portion 4231 and/or the rear end cover 4233, so as to prevent the cable from being pulled or subjected to an external force and damaged in a process where the first motor 421 is transported or carried. The fixing portion 427 includes a hook structure, a snap structure, a pressure plate structure, a cable clip structure, or a clamp. The first cable 425 is detachably fixed, and the first cable 425 is not damaged when being fixed to or detached from the fixing portion 427. In this example, the fixing portion 427 is disposed on an outer side of the rear end cover 4233. The fixing portion 427 includes a pressure plate. A gap for accommodating the cable is disposed between the pressure plate and an outer wall of the rear end cover 4233. The pressure plate fixes the cable after the cable enters the gap. The fixing portion 427 is used for preventing the cable from being pulled by the external force and preventing the lead-out terminal and the direction-changing terminal 4251 from being pulled or detached when the lead-out terminal and the direction-changing terminal 4251 are subjected to the external force.

In this example, the front end cover 4232 is provided with a waterproof breathable valve. An axis of the waterproof breathable valve is parallel to the driving axis 101. A plane of a breathable membrane of the waterproof breathable valve is perpendicular to the driving axis 101. The waterproof breathable valve is disposed at an interface with the transmission assembly and on an inner side of screws for fixing the front end cover 4232 and the gearbox, which helps efficient discharge of internal moisture from a limited space, effectively blocks intrusion of external liquids and particles, and improves sealing reliability and environmental adaptability of the entire machine.

As shown in FIGS. 17, 20, and 21, in this example, the parking brake mechanism 44 includes a second cable 445, and the second cable 445 is connected to a circuit board assembly. The second cable 445 enters the first accommodating space 4261 through the rear end cover 4233, where the first accommodating space 4261 is formed by the rear end cover 4233 and the body portion 4231. The partition portion 4238 is provided with a wire passing hole 4451. The second cable 445 passes through the wire passing hole 4451, is guided from the first accommodating space 4261 to the second accommodating space 4262, and then is led out of the rear end cover 4233 through a first wire outlet 4452 of the rear end cover 4233. Exemplarily, the wire passing hole 4451 is provided with a wire-fixing slot 4453. The second cable 445 is limited and fixed by the wire-fixing slot 4453 when passing through the wire-fixing slot 4453, thereby inhibiting an unexpected movement of the cable, preventing the second cable 445 from loosening or falling due to excessive displacement, improving assembly stability of the second cable 445, and prolonging a service life of the second cable 445.

The eddy current sensor 4235 includes a third cable 446, and the third cable 446 is connected to the circuit board assembly. The third cable 446 enters the second accommodating space 426 of the rear end cover 4233 through the rear end cover 4233. The rear end cover 4233 further includes a second wire outlet 4461 of the rear end cover 4233, and the third cable 446 is led out of or into the second accommodating space 426 through the second wire outlet 4461 of the rear end cover 4233. The second cable 445 and the third cable 446 are led out and extend in the same direction. The directions in which the second cable 445 and the third cable 446 are led out intersect with or are perpendicular to the driving axis 101 of the output shaft 4211 separately, which is conducive to a unified layout and wire lead-out management of a wire harness and reduces an interference risk.

In some alternative examples, the second cable 445 and the third cable 446 are integrated to form an integrated cable. The integrated cable is led out of the rear end cover 4233 through the first wire outlet 4452 of the rear end cover 4233 or the second wire outlet 4461 of the rear end cover 4233. A direction in which the integrated cable is led out intersects with or is perpendicular to the driving axis 101 of the output shaft 4211. A structure of the wire harness is simplified, a mounting space is saved, complexity of an arrangement of multiple cables can be reduced, and structural neatness and maintenance convenience of the entire machine are improved.

In this example, a weight of each of the battery packs 21 is greater than or equal to 9 kg. In an example, the weight of the battery pack 21 is greater than or equal to 10 kg, or greater than or equal to 11 kg, or greater than or equal to 12 kg, or greater than or equal to 13 kg, or greater than or equal to 14 kg, or greater than or equal to 15 kg. For example, the weight of the battery pack 21 is 9 kg, 10 kg, or 15 kg.

In this example, a nominal voltage of the battery pack 21 is about 56 V. For example, the nominal voltage of the battery pack 21 may be 54 V or 58 V. In an example, the nominal voltage of the battery pack 21 is greater than or equal to 56 V, or greater than or equal to 50 V, or greater than or equal to 48 V, or greater than or equal to 40 V. In this example, a capacity of the battery pack 21 is greater than or equal to 20 Ah. In an example, the capacity of the battery pack 21 is greater than or equal to 30 Ah, or greater than or equal to 40 Ah, or greater than or equal to 50 Ah. For example, the capacity of the battery pack 21 may be 20 Ah, 30 Ah, 40 Ah, or 50 Ah. A ratio of the capacity of the battery pack 21 to the weight of the battery pack 21 is greater than or equal to 2 Ah/kg, for example, 2 Ah/kg, 4 Ah/kg, or 5 Ah/kg. Optionally, energy of the battery pack 21 is greater than or equal to 2 kW·h. In an example, the energy of the battery pack 21 is greater than or equal to 3 kW·h, or greater than or equal to 4 kW·h, or greater than or equal to 5 kW·h. For example, the energy of the battery pack 21 may be 2 kW·h, 3 kW·h, 4 kW·h, or 5 kW·h. In some examples, the battery pack 21 disclosed in the present application may be a lithium battery pack, a solid-state battery pack, or a pouch battery pack. The battery pack 21 disclosed in the present application includes lithium iron phosphate cells. In some examples, the battery pack 21 may be a supercapacitor, also referred to as an electrochemical capacitor.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. An electric mowing device, comprising:
a vehicle frame (11);
a traveling wheel set (41) comprising a first driving wheel and a second driving wheel;
a mowing mechanism at least partially disposed between the first driving wheel and the second driving wheel, wherein the mowing mechanism comprises a blade (81) and a cutting deck (83) covering the blade; and
a driving mechanism (42) comprising a first motor (421) having an output shaft (4211) and a transmission assembly (43) connected between the first motor and the first driving wheel, wherein the transmission assembly comprises at least a gear set that externally meshes and a transmission housing (434) for accommodating the gear set;
wherein the transmission housing further comprises a guide member (46) and a pressure relief valve (47), the pressure relief valve adjusts air pressure in the transmission housing, lubricating oil that lubricates at least the gear set is configured in the transmission housing, the guide member guides a flow direction of the lubricating oil, and the guide member extends inward from a sidewall of the transmission housing along a circumferential direction of a largest gear (4331) with a maximum diameter and is disposed between the largest gear and the pressure relief valve.

2. The electric mowing device according to claim 1, wherein the pressure relief valve is disposed on a wall of the transmission housing at a periphery of the largest gear.

3. The electric mowing device according to claim 1, wherein the transmission housing comprises a first housing (4341) and a second housing (4342) that are arranged along an axis direction of the output shaft, and a distance L1 from a mounting surface (4344) where the first housing and the second housing are joined to each other to the first driving wheel is greater than or equal to 10 mm and less than or equal to 110 mm.

4. The electric mowing device according to claim 1, wherein the transmission assembly further comprises bearings (48), the bearings support rotations of shafts in the gear set, and support portions for mounting the bearings are formed on the transmission housing.

5. The electric mowing device according to claim 4, wherein oil slots (4348) are provided on the support portions (4347) to cause the lubricating oil in the transmission housing to lubricate the bearings through the oil slots.

6. The electric mowing device according to claim 5, wherein at least one of the oil slots is provided on each of the support portions.

7. The electric mowing device according to claim 4, wherein at least part of the bearings comprise open bearings.

8. The electric mowing device according to claim 1, wherein the gear set comprises a third gear set (433)for transmitting power to the traveling wheel set, the third gear set comprises a third gear (4331), and the third gear is the largest gear.

9. The electric mowing device according to claim 8, wherein the gear set further comprises a first gear set (431) that is driven by the output shaft of the first motor and rotates about a first axis (401) and a second gear set (432) that rotates about a second axis (402), and the second gear set transmits power of the first gear set to the third gear set that rotates about a third axis.

10. The electric mowing device according to claim 9, wherein the second axis is located below the first axis in an up and down direction when the driving mechanism is mounted on the vehicle frame.

11. The electric mowing device according to claim 9, wherein an included angle α between a line N that connects a projection of the first axis and a projection of the second axis on a first plane and a line M that connects a projection of the third axis and the projection of the second axis on the first plane is greater than or equal to 90° and less than 180°, and the first plane is substantially perpendicular to the first axis.

12. The electric mowing device according to claim 9, wherein a distance L between a projection of the first axis and a projection of the third axis on a first plane is greater than 60 mm and less than 180 mm, and the first plane is substantially perpendicular to the first axis.

13. The electric mowing device according to claim 9, wherein an oil filling hole (49) is further provided on the transmission housing, the oil filling hole is configured for filling lubricating oil into the transmission housing when the lubricating oil is insufficient, a center line of the oil filling hole is parallel to the second axis, and the center line of the oil filling hole is located below the second axis.
